Europäisches Patentamt

European Patent Office

Office européen des brevets

(11) Veröffentlichungsnummer: **0 392 263**
**A2**

## (12) EUROPÄISCHE PATENTANMELDUNG

(21) Anmeldenummer: **90105936.0**

(22) Anmeldetag: **28.03.90**

(51) Int. Cl.5: **H01G 4/38**

(30) Priorität: **13.04.89 DE 3912170**

(43) Veröffentlichungstag der Anmeldung:
**17.10.90 Patentblatt 90/42**

(84) Benannte Vertragsstaaten:
**CH DE FR GB LI SE**

(71) Anmelder: **Siemens Aktiengesellschaft**
**Wittelsbacherplatz 2**
**D-8000 München 2(DE)**

(72) Erfinder: **Oswald, Hans-Peter**
**Anton-Bruckner-Strasse 28**
**D-8520 Erlangen(DE)**

(54) **Anordnung von Hochspannungsgeräten.**

(57) Isolatoren an Hochspannungsgeräten (1) verschmutzen durch Tau, Staub und statische Aufladung. Es wird eine Anordnung von Hochspannungsgeräten (1) vorgeschlagen, bei der mindestens zwei elektrische mit Isolatoren (6) versehene Hochspannungsgeräte (1) in Form eines trapezförmigen Turms in Etagen (a bis f) übereinander angeordnet sind, wobei die Isolatoren (6) der Hochspannungsgeräte (1) der einzelnen Etagen (a bis f) gegeneinander treppenförmig versetzt sind. Bei dieser Anordnung ist eine selbsttätige Reinigung der Isolatoren (6) durch natürlichen Regen möglich.

FIG 1

EP 0 392 263 A2

Die Erfindung bezieht sich auf Hochspannungsgeräte mit Isolatoren, die etagenförmig übereinander angeordnet sind.

In der Siemens-Druckschrift "Mittelspannungs- und Hochspannungskondensatorbatterien und deren Schutzeinrichtungen", Best.-Nr. E 13/1164, - 113446 SD 7801-, ist auf Seite 1 eine aus mehreren Etagen bestehende Hochspannungskondensatorbatterie gezeigt. Die einzelnen Kondensatoren einer jeden Etage weisen einen waagerechten Isolator für die Einführung eines Hochspannungsleitungspols in den Kondensator auf. Die Gehäuse der Kondensatoren bilden jeweils den zweiten Leitungspol. Gleiche Kondensatoren einer jeden Etage sind mit ihren Isolatoren senkrecht untereinander angeordnet. Durch Tau, Staub und statische Aufladung verschmutzen diese Isolatoren. Daher kann eine Reinigung der Isolatoren erforderlich werden. Dazu muß unter Umständen die Kondensatorbatterie vom Netz getrennt werden, wobei die Isolatoren anschließend mit Wasser abgespritzt werden. Die unterhalb liegenden Isolatoren können dabei durch herabtropfendes Schmutzwasser zusätzlich verschmutzt werden. In Gebieten mit erhöhter Luftverunreinigung ist eine Reinigung der Isolatoren nur mit aufwendigen Mitteln möglich. Es müssen dazu ortsveränderliche Abspritzeinrichtungen vorgesehen werden, die während einer Betriebsunterbrechung die Reinigung der Isolatoren vornehmen. Eine Reinigung der Isolatoren während des Betriebes ist wegen der Zugänglichkeit der Isolatoren sehr schwierig und nur mit aufwendigen Einrichtungen möglich.

Der Erfindung liegt die Aufgabe zugrunde, eine Anordnung von elektrischen Hochspannungsgeräten mit Isolatoren anzugeben, die insbesondere bei Einsatz in einer Umgebung mit hoher Luftverunreinigung, ein einfaches Reinigen der Isolatoren erlaubt.

Diese Aufgabe wird erfindungsgemäß gelöst durch eine Anordnung von Hochspannungsgeräten, bei der mindestens zwei elektrische mit Isolatoren versehene Hochspannungsgeräte in Form eines Turms in Etagen übereinander angeordnet sind und die Isolatoren der Hochspannungsgeräte der einzelnen Etagen gegeneinander treppenförmig versetzt sind.

Durch die erfindungsgemäße Anordnung können alle Isolatoren der Hochspannungsgeräte unterschiedlicher Etagen von oben durch herabregnendes Wasser erreicht und gereinigt werden, ohne daß unten liegende Isolatoren verschmutzt werden oder bei Eisbildung bzw. Eisschmelze ein Kurzschluß zwischen zwei übereinander angeordneten Isolatoren entsteht. Die Isolatoren werden durch den natürlichen Regen selbsttätig gereinigt. Fremdschichten, die durch den natürlichen Regen nicht lösbar sind, können mit einer ortsfesten Beregnungsanlage kostengünstig und ohne Betriebsunterbrechung von den Isolatoren entfernt werden.

Bei Hochspannungsgeräten, die jeweils mindestens zwei an einer zumindest annähernd senkrechten Gehäusewand angeordnete Isolatoren aufweisen, ist es günstig, wenn die Achsen der Isolatoren in einer Ebene liegen, die gegen die Senkrechte geneigt ist. Auf diese Weise ist eine Reinigung beider Isolatoren eines Hochspannungsgerätes durch herabregnendes Wasser sichergestellt.

Die Neigung der Ebene kann durch entsprechendes Versetzen der beiden Isolatoren am Hochspannungsgerät erreicht werden.

Es ist auch möglich, die Neigung der Ebene durch Neigung des Hochspannungsgerätes zu bilden. Durch diese Anordnung können herkömmliche Hochspannungsgeräte mit an sich senkrecht übereinanderliegenden Isolatoren verwendet werden, ohne daß ein Versetzen der Isolatoren am Hochspannungsgerät nötig ist. Dabei ist es zweckmäßig, wenn die Hochspannungsgeräte die Form eines Quaders haben und die Flachseite der Hochspannungsgeräte jeder Etage gegen die Senkrechte geneigt, in einem Gerüst angeordnet sind und die Gerüste der einzelnen Etagen unter Zwischenschaltung von Abstandsisolatoren übereinander angeordnet sind.

Die Erfindung kann vorteilhaft bei elektrischen Hochspannungsgeräten-angewendet werden, die Spulen, insbesondere Drosselspulen, Kondensatoren und/oder Widerstände umfassen.

Die Erfindung wird anhand der Zeichnung näher erläutert. Es zeigen:

FIG 1 eine Anordnung von Hochspannungsgeräten in hängender Ausführung,

FIG 2 eine Anordnung von Hochspannungsgeräten in stehender Ausführung in der Seitenansicht,

FIG 3 die Anordnung gemäß FIG 2 in Stirnansicht.

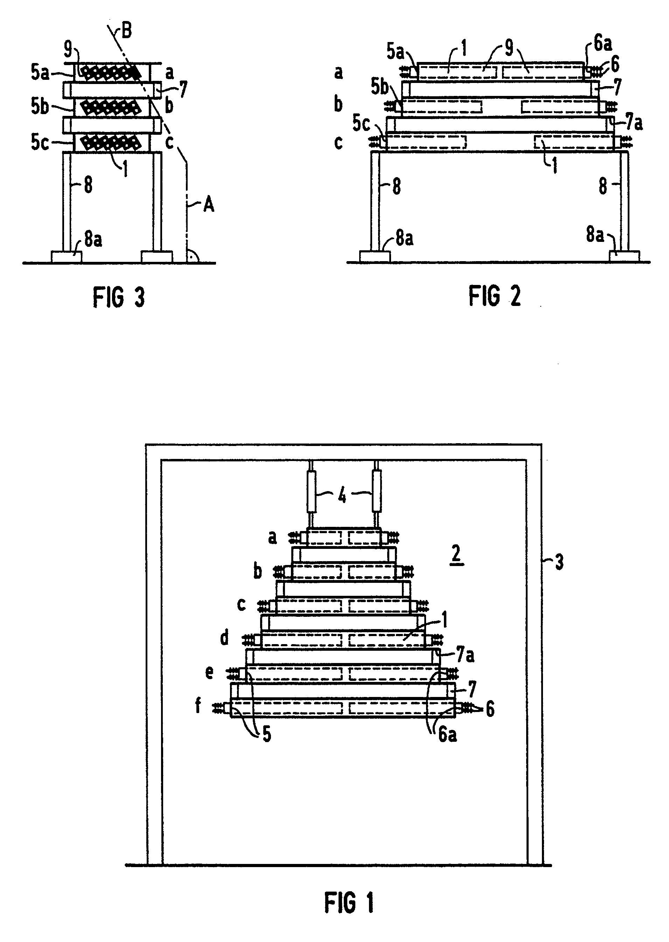

FIG 1 zeigt eine Anordnung von Hochspannungsgeräten 1, die innerhalb eines Gehäuses Kondensatoren enthalten. Die gesamte Anordnung stellt eine Hochspannungsgeräte-Batterie 2 für Freiluftaufstellung dar. An einem Gestell 3 sind mittels Hängeisolatoren 4 Gerüste 5 in untereinanderliegenden Etagen a bis f aufgehängt. Die einzelne Etagen a bis f bildenden Gerüste 5 sind aus Profilschienen gebildet und zur Aufnahme mindestens eines Hochspannungsgerätes 1, im vorliegenden Fall zweier Hochspannungsgeräte 1, ausgebildet. Die einzelnen Gerüste 5 haben eine unterschiedliche Breite und sind trapezförmig angeordnet. Jedes Hochspannungsgerät 1 weist stirnseitig zwei Isolatoren 6 an einer senkrechten Gehäusewand 6a zur Einführung zweier Hochspannung führender Anschlußpole auf. Durch die Anordnung der Hochspannungsgeräte 1 in den trapezförmig angeordneten Gerüsten 5 sind die Isolatoren 6 der einzelnen Etagen gegeneinander treppenförmig versetzt und von oben her für herabregnendes Wasser zugänglich.

Sind den einzelnen Hochspannungsgeräten 1 verschiedener Etagen a bis f unterschiedliche Spannungsebenen zugeordnet, so ist es zweckmäßig, die einzelnen Gerüste 5 durch Abstandsisolatoren 7 voneinander elektrisch zu trennen, wobei die Abstandsisolatoren 7 durch Schraubverbindung mit den zugeordneten Gerüsten 5 verbunden werden. Durch die trapezförmige Anordnung der Gerüste 5 können auch die Abstandsisolatoren 7 von herabregnendem Wasser benetzt werden. Verbessert wird dieser Effekt noch zusätzlich dadurch, daß, wie dargestellt, die oberen Verbindungspunkte 7a der Abstandsisolatoren 7 an nach außen verlängerten Schienen des jeweils oberhalb liegenden Gerüstes 5 soweit nach außen verlegt sind, daß auch diese Abstandsisolatoren 7 von oben her für herabregnendes Wasser zugänglich ist.

Durch Anordnung der Hochspannungsgeräte 1, in diesem Fall der Kondensatoren, in treppenartiger Gerüstbauweise ist eine natürliche Reinigung der Isolatoren 6 und der Abstandsisolatoren 7 durch Regen gegeben. In regenarmen Gebieten kann die Reinigung durch eine ortsfeste Beregnungseinrichtung unterstützt werden.

FIG 2 zeigt eine Anordnung von Hochspannungsgeräten 1, z.B. als Kondensatorbatterie, in stehender Ausführung. Das unterste Gerüst 5 wird dabei von Standbeinen 8, die auch als Abstandsisolatoren ausgebildet sein können und auf Sockeln 8a stehen, getragen. Mit weiteren Abstandsisolatoren 7 sind noch zwei Gerüste 5b, 5c mit Hochspannungsgeräten 1 darüber angeordnet.

Auch hier ist eine trapezartige Gerüstbauweise gezeigt, bei der die Hochspannungsgeräte 1 in Etagen a, b, c übereinander angeordnet sind und die mit Schirmen versehenen Isolatoren 6 der einzelnen Etagen gegeneinander treppenförmig versetzt sind.

FIG 3 zeigt die Anordnung gemäß FIG 2 in Stirnansicht. Dabei sind die einzelnen Hochspannungsgeräte 1 an einer zumindest annähernd senkrechten Gehäusewand 6a mit Isolatoren 6 versehen. Die Hochspannungsgeräte 1 weisen dabei die Form eines Quaders auf, wobei Flachseiten 9 der Hochspannungsgeräte 1 jeder Etage a bis c gegen die Senkrechte A geneigt, in einem Gerüst 5a, 5b, 5c angeordnet sind. Die Gerüste 5 der einzelnen Etagen a, b, c sind unter Zwischenschaltung von Abstandsisolatoren 7 übereinander angeordnet. Die Achsen der Isolatoren 6 liegen in einer gegen die Senkrechte A geneigten Ebene B. Dadurch ist jeder einzelne Isolator 6 von oben her für herabregnendes Wasser zugänglich. Die Neigung der Ebene B ist - wie gezeigt - durch Neigung des Hochspannungsgeräte 1 gebildet.

Durch die versetzte Anordnung der Isolatoren 6 ist die Gefahr eines Überschlages, insbesondere durch das Auftauen nach einer Vereisung, gegenüber früheren Ausführungen verringert.

## Ansprüche

1. Anordnung von Hochspannungsgeräten (1), bei der mindestens zwei elektrische mit Isolatoren (6) versehene Hochspannungsgeräte (1) in Form eines Turms in Etagen (a bis f) übereinander angeordnet sind und die Isolatoren (6) der Hochspannungsgeräte (1) der einzelnen Etagen (a bis f) gegeneinander treppenförmig versetzt sind. (FIG 1, 2)

2. Anordnung nach Anspruch 1, bei der die Hochspannungsgeräte (1) jeweils mindestens zwei an einer zumindest annähernd senkrechten Gehäusewand (6a) angeordnete Isolatoren (6) aufweisen und die Achsen der Isolatoren (6) in einer Ebene (B) liegen, die gegen die Senkrechte (A) geneigt ist.

3. Anordnung nach Anspruch 2, bei der die Neigung der Ebene (B) durch Neigung des Hochspannungsgerätes (1) gebildet ist. (FIG 3)

4. Anordnung nach Anspruch 3, bei der die Hochspannungsgeräte (1) die Form eines Quaders haben und die Flachseiten (9) der Hochspannungsgeräte (1) jeder Etage (a, b, c) gegen die Senkrechte (A) geneigt in einem Gerüst (5, 5a, 5b, 5c) angeordnet sind und die Gerüste (5, 5a, 5b, 5c) der einzelnen Etagen (a, b, c) unter Zwischenschaltung von Abstandsisolatoren (7) übereinander angeordnet sind. (FIG 3)

5. Anordnung nach einem der Ansprüche 1 bis 4, bei der die Hochspannungsgeräte (1) als Kondensatoren ausgebildet sind.

FIG 3

FIG 2

FIG 1